# EUROPÄISCHE PATENTANMELDUNG

(11) **EP 2 120 332 A2**
(43) Veröffentlichungstag der Anmeldung: **18.11.2009**
(21) Anmeldenummer: 09006106.0
(22) Anmeldetag: 05.05.2009
(51) Int. Cl.: H02P 31/00

(54) **Motorsteuerung zum Ansteuern eines Elektromotors**

(30) Priorität: 17.05.2008 DE 102008024102
(71) Anmelder: Diehl AKO Stiftung & Co. KG, 88239 Wangen (DE)
(72) Erfinder: Wende, Thomas, 90409 Nürnberg (DE); Frisch, Rainer, 88239 Wangen (DE)
(74) Vertreter: Diehl Patentabteilung

(57) **Zusammenfassung**

Eine Motorsteuerung (10) zum Ansteuern wenigstens eines Elektromotors (12) weist einen Betriebssignalgenerator (14) zum Erzeugen eines Betriebssteuersignals für den wenigstens einen Elektromotor und ferner einen Klangsignalgenerator (16) zum Erzeugen eines Klangsteuersignals sowie einen Mischer (18) zum Überlagern des Klangsteuersignals auf das Betriebssteuersignal, um ein Steuersignal für den wenigstens einen Elektromotor (12) zu erhalten, auf. Bei dem Gerät, in dem ein Elektromotor mit einer solchen Motorsteuerung enthalten ist, kann dann auf Lautsprecher und dergleichen verzichtet werden, um zum Beispiel Signaltöne auszugeben, die dem Benutzer einen Betriebszustand des Geräts anzeigen.

## Beschreibung

Die vorliegende Erfindung betrifft eine Motorsteuerung zum Ansteuern wenigstens eines Elektromotors.

Elektromotoren werden in der Regel dazu benutzt, elektrische Energie in Bewegungsenergie umzuwandeln. Sie werden u.a. in elektronischen Haushaltsgeräten wie Waschmaschinen, Mikrowellengeräten und dergleichen eingesetzt. Üblicherweise können im Betrieb vom Elektromotor erzeugte Schallwellen durch den Benutzer wahrgenommen werden, wobei es im Allgemeinen das Ziel des Herstellers ist, diese Schallwellen zu minimieren.

Ferner benötigen viele elektronische Geräte einen Lautsprecher oder dergleichen Tonausgabevorrichtungen, um dem Benutzer zum Beispiel mittels Signaltönen einen Betriebszustand des Geräts anzuzeigen, eine Benutzereingabe zu bestätigen, einen Alarm auszugeben, Informationen zu vermitteln, usw..

Es ist eine Aufgabe der vorliegenden Erfindung, den Aufbau von elektronischen Geräten, die einen Elektromotor enthalten, zu vereinfachen.

Diese Aufgabe wird gelöst durch eine Motorsteuerung zum Ansteuern wenigstens eines Elektromotors mit den Merkmalen des Anspruchs 1. Vorteilhafte Ausgestaltungen und Weiterbildungen der Erfindung sind Gegenstand der abhängigen Ansprüche.

Die Motorsteuerung zum Ansteuern wenigstens eines Elektromotors enthält einen Betriebssignalgenerator zum Erzeugen eines Betriebssteuersignals für den wenigstens einen Elektromotor und ferner einen Klangsignalgenerator zum Erzeugen eines Klangsteuersignals sowie einen Mischer zum Überlagern des Klangsteuersignals auf das Betriebssteuersignal, um ein Steuersignal für den wenigstens einen Elektromotor zu erhalten.

Durch die erfindungsgemäße Motorsteuerung wird dem Elektromotor nicht nur das übliche Betriebssteuersignal zugeführt, sondern darüber hinaus auch noch ein Klangsteuersignal, sodass die dem Elektromotor zugeführte Energie - je nach Betriebssteuersignal - nicht nur in eine Drehbewegung der Motorwelle, sondern in eine Vibration von Komponenten des Elektromotors umgewandelt wird, sodass der Elektromotor als ein Lautsprecher funktioniert. Mit dieser Konstruktion ist es möglich, auf das Vorsehen eines Lautsprechers, Summers oder dergleichen Tonausgabevorrichtungen bei einem elektronischen Gerät zu verzichten, aber dem elektronischen Gerät dennoch die Möglichkeit zu geben, irgendwie geartete Informationen in Klangform auszugeben.

Die vorliegende Erfindung ist dabei grundsätzlich bei jedem beliebigen Elektromotor anwendbar. Insbesondere können auch herkömmliche (Standard-) Elektromotoren benutzt werden, ohne diese modifizieren zu müssen.

Das Betriebssteuersignal der Erfindung entspricht dem herkömmlichen Steuersignal eines Elektromotors und enthält zum Beispiel Informationen über die gewünschte Drehzahl des Elektromotors, die je nach Betriebszustand des elektronischen Geräts verschieden sein kann. Das Klangsteuersignal enthält dagegen Informationen betreffend die Erzeugung akustischer Informationen. Das Klangsteuersignal wird dem Betriebssteuersignal durch einen Mischer überlagert bzw. aufmoduliert, um ein Steuersignal für den Elektromotor zu erzeugen.

In einer Ausführungsform der Erfindung enthält die Motorsteuerung ferner einen Frequenzumrichter, dem das Steuersignal von dem Mischer zugeführt wird und der den Elektromotor mit einer entsprechenden Ansteuerfrequenz betreibt.

In einer alternativen Ausführungsform der Erfindung enthält die Motorsteuerung ferner einen Frequenzumrichter, dem das Betriebssteuersignal von dem Betriebssignalgenerator und das Klangsteuersignal von dem Klangsignalgenerator zugeführt werden, und der Mischer ist in dem Frequenzumrichter integriert, um das Steuersignal zum Generieren der gewünschten Ansteuerfrequenz für den Elektromotor zu erzeugen.

In einer Ausgestaltung der Erfindung ist das vom Klangsignalgenerator erzeugte Klangsteuersignal zum Erzeugen von Signaltönen, Musik und/oder Sprache durch den Elektromotor geeignet.

In einer weiteren Ausgestaltung der Erfindung ist der Elektromotor ein Elektromotor eines elektronischen Haushaltsgeräts.

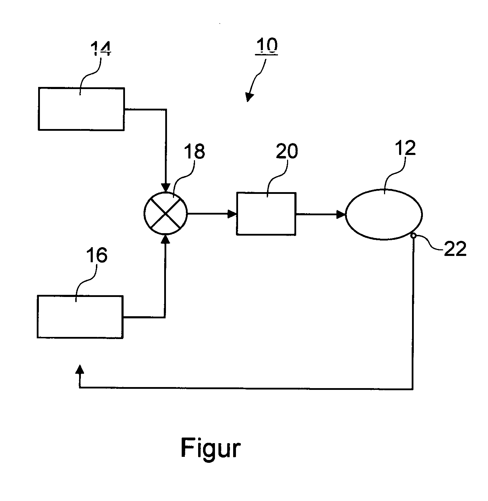

Obige sowie weitere Merkmale und Vorteile der Erfindung werden aus der nachfolgenden Beschreibung bevorzugter, nicht-einschränkender Ausführungsbeispiele unter Bezug auf die beiliegende Zeichnung besser verständlich. Darin zeigt die einzige Figur eine schematische Darstellung des Aufbaus einer Motorsteuerung zum Ansteuern eines Elektromotors gemäß der vorliegenden Erfindung.

Die Figur zeigt stark vereinfacht den Aufbau einer Motorsteuerung 10 für einen Elektromotor 12. Der Elektromotor 12 ist zum Beispiel Bestandteil eines elektronischen Haushaltsgeräts wie beispielsweise einer Waschmaschine, eines Mikrowellengeräts, eines Trockners, eines Staubsaugers und dergleichen.

Die Motorsteuerung 10 enthält einen Betriebssignalgenerator 14 zum Erzeugen eines Betriebssteuersignals, welches Informationen über die gewünschte Drehzahl des Elektromotors 12 zum Betrieb des elektronischen Geräts enthält. Die Drehzahl des Elektromotors 12 kann für ein elektronisches Gerät entweder immer gleich sein oder je nach Betriebszustand, Programmmodus und dergleichen unterschiedlich sein.

In der Motorsteuerung 10 ist ferner ein Klangsignalgenerator 16 vorgesehen. Dieser erzeugt ein Klangsteuersignal betreffend akustische Informationen, die von dem elektronischen Gerät ausgegeben werden sollen. Diese akustischen Informationen können im einfachsten Fall zum Beispiel einen Signalton (mit fester Frequenz) betreffend einen Betriebszustand des elektronischen Geräts, eine Bestätigung einer Benutzereingabe, eine Alarm- oder Fehlermeldung, ferner eine Tonfolge bzw. Musik und/oder Sprachinformationen enthalten.

Das vom Klangsignalgenerator 16 erzeugte Klangsteuersignal wird mit Hilfe eines Mischers 18 dem vom Betriebssignalgenerator 14 erzeugten Betriebssteuersignal überlagert bzw. aufmoduliert. Das so erzeugte Steuersignal wird einem Frequenzumrichter 20 zugeführt, der den Elektromotor 12 mit einer Drehzahl entsprechend der durch das Steuersignal angegebenen Ansteuerfrequenz betreibt.

Wird die Ansteuerfrequenz des Elektromotors 12 mittels des Betriebssteuersignals und des Klangsteuersignals so gewählt, dass die dem Elektromotor 12 zugeführte elektrische Energie zumindest nicht vollständig in eine Drehbewegung der Motorwelle umgewandelt wird, sondern wenigstens teilweise in eine Vibration von Komponenten des Elektromotors, so funktioniert der Elektromotor 12 als ein Lautsprecher. Die von dem Elektromotor 12 auf diese Weise akustisch ausgegebenen Informationen können dabei durch das Klangsteuersignal des Klangsignalgenerators 16 gesteuert werden. Zu diesem Zweck ist der Klangsignalgenerator 16 zum Beispiel auch mit einem Speicher (nicht dargestellt) verbunden, in dem verschiedene im Voraus erzeugte Klangsteuersignale zum Erzeugen bestimmter akustischer Informationen abgelegt sein können.

Ist der Elektromotor 12 zum Beispiel ein Elektromotor, der in einer Waschmaschine eingebaut ist, so kann die Waschtrommel der Waschmaschine zusätzlich als ein Resonanzkörper wirken und das durch den Elektromotor 12 erzeugte akustische Signal verstärken.

Je nach Art und Konstruktion des Elektromotors und des elektronischen Geräts, in das der Elektromotor eingebaut ist, können die akustischen Informationen vom Elektromotor 12 nur erzeugt werden, wenn dieser seine Motorwelle gerade nicht drehend antreibt, oder auch dann erzeugt werden, wenn er seine Motorwelle drehend antreibt.

In dem in der Figur dargestellten Ausführungsbeispiel wird dem Frequenzumrichter 20 ein Steuersignal zugeführt, welches eine Überlagerung des Betriebssteuersignals und des Klangsteuersignals darstellt. Alternativ ist es auch möglich, das Betriebssteuersignal vom Betriebssignalgenerator 14 und das Klangsteuersignal vom Klangsignalgenerator 16 dem Frequenzumrichter 20 getrennt zuzuführen und mittels eines im Frequenzumrichter 20 integrierten Mischers zu überlagern.

Wie in der Figur angedeutet, ist es außerdem möglich, den Elektromotor 12 mit einem Drehzahlsensor 22 zum Erfassen seiner aktuellen Drehzahl zu versehen. Die so erfasste aktuelle Drehzahl wird der Motorsteuerung 10 zugeführt, sodass das Betriebssteuersignal des Betriebssignalgenerators 14 und/oder das Klangsteuersignal des Klangsignalgenerators 16 dem tatsächlichen Betriebszustand des Elektromotors 12 angepasst werden können.

Ferner kann die Motorsteuerung 10 der Erfindung entweder einen Elektromotor 12 ansteuern, wie in der Figur veranschaulicht, oder wahlweise auch mehrere Elektromotoren ansteuern.

Die oben beschriebene Motorsteuerung der Erfindung ist in vorteilhafter Weise auf Elektromotoren in elektronischen Haushaltsgeräten (Waschmaschinen, Mikrowellengeräten, usw.) anwendbar, ohne dass ihre Anwendung auf solche elektronischen Geräte beschränkt sein soll.

## Patentansprüche

1. Motorsteuerung (10) zum Ansteuern wenigstens eines Elektromotors (12), mit einem Betriebssignalgenerator (14) zum Erzeugen eines Betriebssteuersignals für den wenigstens einen Elektromotor,
**dadurch gekennzeichnet,**
**dass** die Motorsteuerung (10) ferner einen Klangsignalgenerator (16) zum Erzeugen eines Klangsteuersignals und einen Mischer (18) zum Überlagern des Klangsteuersignals auf das Betriebssteuersignal, um ein Steuersignal für den wenigstens einen Elektromotor (12) zu erhalten, aufweist.

2. Motorsteuerung nach Anspruch 1,
**dadurch gekennzeichnet,**
**dass** die Motorsteuerung (10) ferner einen Frequenzumrichter (20) enthält, dem das Steuersignal von dem Mischer (18) zugeführt wird.

3. Motorsteuerung nach Anspruch 1,
**dadurch gekennzeichnet,**
**dass** die Motorsteuerung (10) ferner einen Frequenzumrichter (20) enthält, dem das Betriebssteuersignal von dem Betriebssignalgenerator (14) und das Klangsteuersignal von dem Klangsignalgenerator (16) zugeführt werden; und dass der Mischer (18) in dem Frequenzumrichter (11) integriert ist.

4. Motorsteuerung nach einem der Ansprüche 1 bis 3,
**dadurch gekennzeichnet,**
**dass** das vom Klangsignalgenerator (16) erzeugte Klangsteuersignal zum Erzeugen von Signaltönen, Musik und/oder Sprache durch den Elektromotor (12) geeignet ist.

5. Motorsteuerung nach einem der vorhergehenden Ansprüche,
**dadurch gekennzeichnet,**
**dass** der Elektromotor (12) ein Elektromotor eines elektronischen Haushaltsgeräts ist.
